# EUROPÄISCHE PATENTANMELDUNG

(11) **EP 4 052 560 A1**
(43) Veröffentlichungstag der Anmeldung: **07.09.2022**
(21) Anmeldenummer: 21210784.1
(22) Anmeldetag: 26.11.2021
(51) Int. Cl.: A01D 43/08, A01D 43/10, G01B 11/02, G01B 11/04, G06N 3/02, G06N 20/00, G06V 10/82, G06V 20/10

(54) **VERFAHREN ZUR ERKENNUNG VON LÄNGEN EINES PARTIKELS**

(30) Priorität: 04.03.2021 DE 102021105273
(71) Anmelder: CLAAS E-Systems GmbH, 49201 Dissen (DE)
(72) Erfinder: Rasmussen, Christoffer, 2100 København Ø (DK); Kirk, Kristian, 2100 Kopenhagen (DK); Moeslund, Thomas B., 8800 Viborg (DK); Belau, Sven Carsten, 33332 Gütersloh (DE); Fischer, Frédéric, 59759 Arnsberg (DE)
(74) Vertreter: CLAAS Gruppe

(57) **Zusammenfassung**

Die Erfindung betrifft ein Verfahren zur Erkennung von Längen eines Partikels (12) in einem aus Partikeln (12) bestehenden Gutstrom (13) mittels einer Recheneinheit (14), wobei die Recheneinheit (14) eingerichtet ist, Bilder (15) des Gutstroms (13) in einer Analyseroutine zu analysieren und mittels dieser Analyse Partikellängen (L) von in den Bildern (15) enthaltenen Partikeln (12) des Gutstroms (13) abzuleiten. Es wird vorgeschlagen, dass die in der Analyseroutine abgeleitete Partikellänge (L) eine Überlänge (U) ist und dass die Analyseroutine auf einem auf das Finden von Partikeln (12) mit Überlänge (U) trainiertem Maschinenlernverfahren basiert.

## Beschreibung

Die Erfindung betrifft ein Verfahren zur Erkennung von Längen eines Partikels in einem aus Partikeln bestehendem Gutstrom gemäß dem Oberbegriff von Anspruch 1 sowie einen Datenträger mit einem Trainingsdatensatz zur Verwendung in dem vorschlagsgemäßen Verfahren gemäß Anspruch 15.

Der Einsatz von Kamerasystemen zur Detektion von, eine landwirtschaftliche Erntemaschine durchlaufenden Gutströmen ist im Stand der Technik bereits umfassend beschrieben. So offenbart beispielsweise die EP 2 098 109 eine als Feldhäcksler ausgeführte Erntemaschine, in welcher ein Gutstrom mittels eines Kamerasystems aufgenommen wird und die generierten Bilder sodann einer Analyse unterzogen werden, um die Teilchengröße der in den Bildern aufgenommenen Partikel, zu ermitteln. Die Größe der Partikel wird im Wesentlichen davon bestimmt, wie intensiv das Erntegut mittels der Häckseltrommel und einer dieser nachgeordneten Zerkleinerungseinrichtung, eines sogenannten Corncrackers, zerkleinert wird. Die auf diese Weise ermittelte Häckselgutlänge wird sodann genutzt, um diese mit der voreingestellten sogenannten theoretischen Häcksellänge zu vergleichen und bei signifikanter Abweichung nachzuregeln. Dieses Nachregeln kann auf unterschiedliche Weise erfolgen. Indem die Zuführgeschwindigkeit des Erntegutes zur Häckseltrommel und/oder die Drehzahl der Häckseltrommel geändert werden kann bewirkt werden, das ein intensiverer oder weniger intensiver Häckselprozess eine Änderung der Partikelgröße bewirkt. Der gleiche Effekt tritt ein, wenn die Intensität der Zerkleinerung durch den Corncracker intensiviert oder reduziert wird, indem der Crackerspalt oder die Crackerspalte verkleinert oder vergrößert werden.

In US2016/0029561 ist beispielsweise ein Verfahren beschrieben, welches kamerabasiert den Zerkleinerungsgrad von Maiskörnern in einem Erntegutstrom ermittelt und in Abhängigkeit von dem ermittelten Zerkleinerungsgrad sodann eine Änderung der Zerkleinerungsintensität des Corncrackers in der Weise bewirkt, dass der Crackerspalt entweder vergrößert oder verkleinert wird.

Übergroße Partikel von gehäckseltem Erntegut in der Maissilage haben für einen Landwirt erhebliche Nachteile. Solche Partikel können die Silagefutterqualität für Milchkühe herabsetzen und durch entstehende Lufteinschlüsse die Bildung von Schimmelpilzen während der Lagerung fördern. Die Länge der Erntegutpartikel hängt maßgeblich von den Einsatzbedingungen des Landwirts ab und wird weitgehend durch die Einstellung der theoretischen Schnittlänge am Feldhäcksler gesteuert, die die gewünschte Partikelgröße definiert. Da ein Feldhäcksler Hunderte von Tonnen pro Stunde ernten kann, ist ein effizientes und robustes System zur Messung der Qualität auf dem Feld erforderlich. Die aus dem Stand der Technik bekannten Methoden erfordern jedoch oft noch immer manuelle, fehleranfällige Trennschritte oder den Versand von Proben an ein externes Labor, was wiederum zu langen Wartezeiten führt bis die Auswertergebnisse vorliegen.

Der Erfindung liegt das Problem zugrunde, das bekannte Verfahren zur Erkennung von Längen eines Partikels derart auszugestalten und weiterzubilden, dass die Detektionsgenauigkeit verbessert und/oder eine Rechenintensität reduziert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, das herkömmliche Verfahren der Bildverarbeitung bei chaotischen und inhomogenen Gutströmen schnell an ihre Grenzen gelangen. Der Einsatz eines Maschinenlernverfahrens kann die Klassifizierung von Partikeln auch bei chaotischen Gutströmen verbessern, die Klassifizierung aller Partikel in einem Bild ist jedoch in den meisten Anwendungsfällen mit einer realistischen Rechenleistung nicht in Echtzeit möglich. Im landwirtschaftlichen Alltag ist das Bestimmen eines vollständigen Größenhistogramms aller Partikellängen jedoch zumeist gar nicht notwendig. Es wurde erkannt, dass die Anwendung eines Maschinenlernverfahrens, insbesondere in Echtzeit, deutlich weniger rechenintensiv ist, wenn nicht versucht wird, alle Partikel in einem Bild zu erkennen. Vorliegend steht daher die Erkennung von Partikeln mit Überlänge im Fokus.

Speziell Partikel mit Überlänge haben bei der Silage und der Fütterung von Nutztieren einen starken negativen Effekt. Auch bei anderen Gutströmen sind Partikel mit Überlänge regelmäßig problematischer als beispielsweise zu kleine Partikel. Vorliegend wird daher vorgeschlagen, mittels einer Recheneinheit in einer Analyseroutine Bilder des Gutstroms zu analysieren und mittels dieser Analyse Partikellängen von in den Bildern enthaltenen Partikeln des Gutstroms abzuleiten. Dabei wird ein Maschinenlernverfahren verwendet, das speziell auf das Finden von Partikeln mit Überlänge trainiert ist. Im Gegensatz zu herkömmlichen Verfahren der Bildverarbeitung, die das gesamte Bild analysieren, wird so bereits sehr früh ein Großteil der Fläche des Bildes aussortiert, so dass die rechenintensiven Operationen deutlich seltener durchgeführt werden. Dadurch wird das Verfahren günstiger in der Anwendung und prinzipiell echtzeitfähig.

Im Einzelnen wird vorgeschlagen, dass die in der Analyseroutine abgeleitete Partikellänge eine Überlänge ist und dass die Analyseroutine auf einem auf das Finden von Partikeln mit Überlänge trainiertem Maschinenlernverfahren basiert.

Interessant dabei ist weiterhin, dass auch der Trainingsaufwand reduziert werden kann. Insbesondere bei einem Training mittels manueller Annotationen müssen durch den Fokus auf überlange Partikel deutlich weniger Partikel pro Bild annotiert werden. So werden zwar mehr Bilder benötigt, um das Maschinenlernverfahren zu trainieren, dieses kann jedoch schneller spezifisch trainiert werden.

Die Ansprüche 2 und 3 betreffen die bevorzugte und hier im Vordergrund stehende Anwendung des vorschlagsgemäßen Verfahrens auf einer landwirtschaftlichen Erntemaschine, insbesondere einem Feldhäcksler. Besonders interessant ist dabei die Steuerung der landwirtschaftlichen Erntemaschine gemäß Anspruch 3, die insbesondere in Echtzeit stattfinden kann.

Gemäß Anspruch 4 kann vorgesehen sein, dass die Analyseroutine einen Vorschlagsschritt und gegebenenfalls einen Klassifikationsschritt umfasst. Durch die Trennung der Analyseroutine in einem Vorschlagsschritt, der vorzugsweise mit wenig Rechenleistung Vorschlagsregionen identifiziert, die potentiell Partikel mit Überlänge enthalten und einen Klassifikationsschritt, der insbesondere nur diese Regionen analysiert, können im Klassifikationsschritt komplexere Berechnungen durchgenommen werden, da dieser nur auf wenige Ausschnitte des Bildes angewendet wird. Eine weitere Effizienzsteigerung ergibt sich, wenn der Klassifikationsschritt teilweise Berechnungen des Vorschlagsschritts wiederverwendet.

Bei der bevorzugten Ausgestaltung gemäß Anspruch 5 basiert die Analyseroutine auf einem trainierten neuronalen Netzwerk als Maschinenlernverfahren, das vorzugsweise ein neuronales Faltungsnetzwerk ist. Neuronale Faltungsnetzwerke erzielen in der Bildverarbeitung besonders gute Ergebnisse. In einer besonders bevorzugten Ausgestaltung gemäß Anspruch 6 ist dabei vorgesehen, dass der Vorschlagsschritt und/oder der Klassifikationsschritt auf einem trainierten neuronalen Netzwerk basieren und vorzugsweise teilweise dasselbe trainierte neuronale Netzwerk verwenden.

Die Ansprüche 7 und 8 betreffen bevorzugte Ausgestaltungen des Vorschlagsschritts und des Klassifikationsschritts. Das ermöglicht eine gute Kombination aus Effizienz und Genauigkeit. Anspruch 8 betrifft dabei weiterhin die Möglichkeit, eine Klasse mit akzeptablen Partikeln mit Überlängen vorzusehen. Dies ist insbesondere dann interessant, wenn gewisse Überlängen systematisch durch den Prozess bedingt sind und nicht oder nur sehr schlecht verhindert werden können.

Anspruch 9 gibt bevorzugte Definitionen der Überlänge an. Diese sind abhängig von normalen Streuungen der Partikellängen und dem negativen Effekt längerer Partikel gewählt.

Es kann der Fall sein, dass in unterschiedlichen Prozessen unterschiedliche Längen von Partikeln als überlang eingestuft werden. Es hat sich dabei herausgestellt, dass die Genauigkeit des Verfahrens erhöht wird, wenn das Maschinenlernverfahren jeweils nur auf einen Bereich der Überlänge trainiert wird. Entsprechend kann gemäß Anspruch 10 vorgesehen sein, dass die Recheneinheit aus mindestens zwei trainierten Maschinenlernverfahren, die jeweils auf unterschiedliche Überlängenbereiche trainiert sind, auswählt.

Die Ansprüche 11 bis 13 betreffen bevorzugte Ausgestaltungen eines Trainingsschritts des Maschinenlernverfahrens. Dabei können gemäß Anspruch 11 annotierte Bilder des Gutstroms zum Einsatz kommen und es kann vorzugsweise entweder ein allgemeines Training mit anschließendem spezifischem Training für mehrere Trainingsdatensätze oder jeweils nur ein spezifisches Training durchgeführt werden. Auch eine Kombination, wobei einige Trainingsdatensätze erst allgemein und dann spezifisch und andere Trainingsdatensätze direkt spezifisch trainiert werden, ist möglich. Dies trägt dem Umstand Rechnung, dass bei unterschiedlichen Definitionen von Überlänge auch systematische Unterschiede zwischen den Partikeln bestehen können, die keineswegs nur einer Skalierung der Partikel gleichkommen. Insbesondere eine Homogenität eines Partikels wird bei längeren Partikeln häufig sinken.

Anspruch 12 betrifft das Training von Ankerboxen, wobei vorzugsweise ein Clustering-Verfahren als Ausgangspunkt für das Training der Ankerboxen verwendet wird.

Anspruch 13 betrifft die Möglichkeit, weiterhin unterschiedliche Trainingsdatensätze abhängig von einer Pflanzenart und/oder einer Ernteperiode und/oder einem Erntewetter zu erzeugen. So kann eine erhöhte Genauigkeit bei der Erkennung der Partikel mit Überlänge erreicht werden, ohne den Rechenaufwand während der Nutzung des Verfahrens zu erhöhen.

Anspruch 14 betrifft einige bevorzugte technische Ausgestaltungen, die für die Effizienz und insbesondere die Echtzeitfähigkeit des neuronalen Netzwerks vorteilhaft sind.

Nach einer weiteren Lehre gemäß Anspruch 15, der eigenständige Bedeutung zukommt, wird ein Datenträger mit einem Trainingsdatensatz zu Verwendung in dem vorschlagsgemäßen Verfahren beansprucht. Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: einen Feldhäcksler, der den bevorzugten Anwendungsfall des vorschlagsgemäßen Verfahrens bildet,
- Fig. 2: schematisch das vorschlagsgemäße Maschinenlernverfahren,
- Fig. 3: schematisch einen Trainingsschritt für das vorschlagsgemäße Verfahren und
- Fig. 4: schematisch die Anwendung des vorschlagsgemäßen Verfahrens.

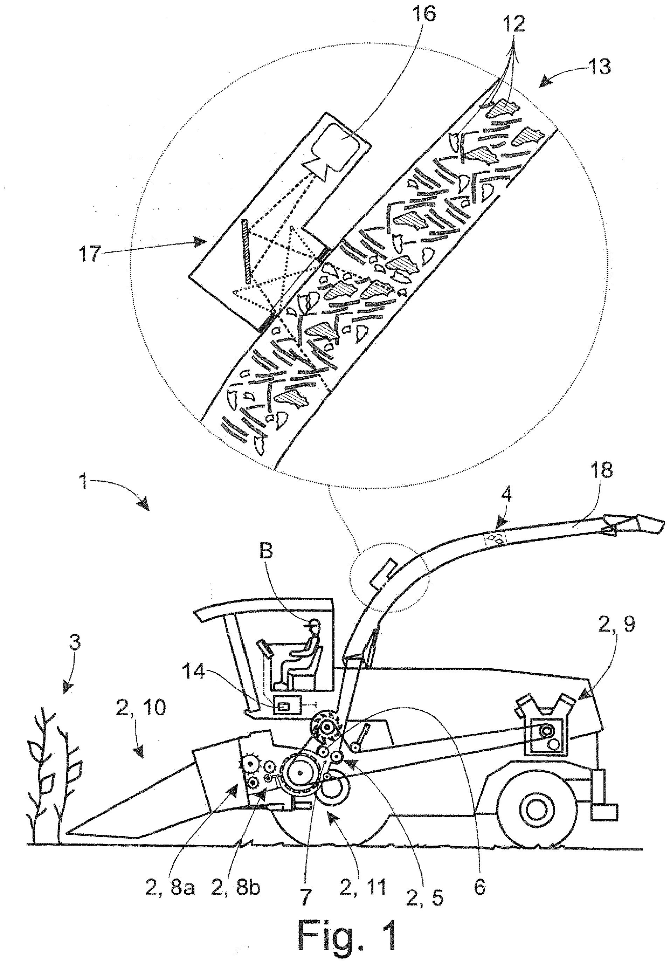

Vorliegend steht die landwirtschaftliche Anwendung des vorschlagsgemäßen Verfahrens im Vordergrund. Für das bessere Verständnis wird daher zuerst der in Fig. 1 dargestellte Feldhäcksler 1 näher beleuchtet, der anschließend als Beispiel für die Anwendung des vorschlagsgemäßen Verfahrens dient.

Der in Fig. 1 dargestellte Feldhäcksler 1 dient zur Durchführung eines Ernteprozesses und weist mindestens ein Arbeitsaggregat 2 zum Abernten eines Feldbestandes 3 und/oder zur Verarbeitung von Erntegut 4 des Feldbestandes 3 im Rahmen des Ernteprozesses auf. Hier und vorzugsweise handelt es sich bei dem Feldbestand 3 um Maispflanzen. Grundsätzlich kann vorgesehen sein, dass der Feldhäcksler 1 den Feldbestand 3 aberntet. Alternativ kann der Feldhäcksler 1 jedoch auch bereits abgeernteten Feldbestand 3 lediglich aufnehmen. Das so gewonnene Erntegut 4 wird sodann von dem Feldhäcksler 1 verarbeitet, insbesondere gehäckselt.

Naturgemäß umfasst das Erntegut 4 hier Kornbestandteile und Nicht-Kornbestandteile. Bei den Kornbestandteilen kann es sich um Maiskörner der Maispflanzen handeln. Die Nicht-Kornbestandteile können dann Blätter, Stängel und dergleichen der Maispflanze sein.

Der Feldhäcksler 1 weist als Arbeitsaggregat 2 vorzugsweise einen Corncracker 5 zum Aufbereiten der Kornbestandteile auf. Das mindestens eine Arbeitsaggregat 2 ist mit Maschinenparametern einstellbar. Mittels dieser Einstellung der Maschinenparameter lässt sich in großem Umfang Einfluss auf die Funktion des Arbeitsaggregats 2 nehmen. Bei den Maschinenparametern kann es sich um diverse denkbare funktionale Parameter des Arbeitsaggregats 2 handeln. Die Maschinenparameter können sehr konkret, beispielsweise einen Strom betreffen oder eher abstrakt eine Fahrtroute des Feldhäckslers 1. Der Begriff "Maschinenparameter" ist somit weit zu verstehen.

Im Betrieb kann der Corncracker 5 das Erntegut 4 zerkleinern. Der Corncracker 5 weist hier zwei Walzen 6 auf, die im Betrieb jeweils mit einer als Maschinenparameter einstellbaren Drehzahl rotieren. Zwischen den Walzen 6 verbleibt ein Spalt 7 mit einer als Maschinenparameter einstellbarer Spaltbreite. Das Erntegut 4 wird im Betrieb des Feldhäckslers 1 durch den Spalt 7 transportiert. Bekannt und ebenso bevorzugt sind auch Feldhäcksler 1 mit mehr als zwei Walzen 6 und/oder mehr als einem Spalt 7. Insbesondere kann der Feldhäcksler 1 drei Walzen 6 und zwei Spalte 7 aufweisen.

Die Walzen 6 weisen bevorzugt eine als Maschinenparameter einstellbare Differenzdrehzahl auf, um die sich die Drehzahl der Walzen 6 unterscheidet. Durch die Differenzdrehzahl der Walzen 6 werden die durch den mindestens einen Spalt 7 zwischen den Walzen 6 hindurchtransportierten Kornbestandteile von den Walzen 6 zerkleinert. Um eine maximale Zerkleinerung und somit eine hohe Aufbereitungsqualität der Kornbestandteile zu erreichen, könnte die Spaltbreite minimal eingestellt werden. Diese Einstellung verbraucht jedoch mehr Energie des Feldhäckslers 1 als nötig.

Der in Fig. 1 dargestellte und insoweit bevorzugte Feldhäcksler 1 weist als Arbeitsaggregat 2 Einzugswalzen 8a und/oder Vorpresswalzen 8b, insbesondere jeweils mit einer als Maschinenparameter einstellbaren Drehzahl, auf. Über diese Drehzahl kann eine Häcksellänge des Ernteguts 4 einstellbar sein. So ergibt sich eine theoretische Schnittlänge TLOC des Häckselgutes auf Basis der physikalischen, variierenden tatsächlichen Häcksellänge. Der Feldhäcksler 1 kann als Arbeitsaggregat 2 zusätzlich oder alternativ einen Motor 9 mit einer als Maschinenparameter einstellbaren Drehzahl zum Antreiben des Feldhäckslers 1 und zur Energieversorgung zumindest eines der weiteren Arbeitsaggregate 2 aufweisen. Weiterhin kann der Feldhäcksler 1 als Arbeitsaggregat 2 ein Vorsatzgerät 10 zum Aufnehmen des Feldbestandes 3 aufweisen. Dieses Aufnehmen kann ein Abernten umfassen. Zusätzlich kann der Feldhäcksler 1 auch Einzugswalzen 8a mit einer als Maschinenparameter einstellbaren Drehzahl in üblicher Art und Weise aufweisen.

Der Feldhäcksler 1 kann als Arbeitsaggregat 2 auch eine Häckseltrommel 11 zum Häckseln des Ernteguts 4 aufweisen. Da die Häckseltrommel 11 häufig direkt mit dem Motor 9 des Feldhäckslers 1 gekoppelt ist, kann es vorgesehen sein, dass die Häcksellänge im Wesentlichen, ohne Änderung der Motordrehzahl, nur über die Vorpresswalzen 8b einstellbar ist. Andere Anordnungen sind jedoch ebenso möglich. Entsprechend kann auch vorgesehen sein, dass die Häcksellänge nur sekundär über die Vorpresswalzen 8b einstellbar ist.

Hier und vorzugsweise wird die theoretische Schnittlänge TLOC konkret über die Drehzahl der Einzugswalzen 8a und/oder die Drehzahl der Vorpresswalzen 8b und/oder einen Anpressdruck der Vorpresswalzen 8b und/oder eine Drehzahl der Häckseltrommel 11 eingestellt. Zusätzlich oder alternativ wird die theoretische Schnittlänge TLOC vorzugsweise über eine Anzahl von Häckselmessern der Häckseltrommel 11 eingestellt, wobei die Häckseltrommel 11 austauschbar sein kann. Die ebenfalls einstellbare Drehzahl der Walzen 6 des Corncrackers 5 und der Spalt 7 haben hier und vorzugsweise einen vernachlässigbaren indirekten Einfluss auf die theoretische Schnittlänge TLOC und dienen daher nicht zu deren Einstellung. Andere Anordnungen sind denkbar und grundsätzlich bekannt.

Vor diesem Hintergrund kann das vorschlagsgemäße Verfahren zur Erkennung von Längen eines Partikels 12 in einem aus Partikeln 12 bestehenden Gutstrom 13 mittels einer Recheneinheit 14 nun näher erläutert werden. Bei diesem Gutstrom 13 handelt es sich hier und vorzugsweise um einen Erntegutstrom. Dabei ist es vorzugsweise so, dass das Erntegut 4 im Betrieb einer landwirtschaftlichen Erntemaschine, insbesondere des Feldhäckslers 1, als Erntegutstrom durch die landwirtschaftliche Erntemaschine 1 transportiert wird. Bei den Partikeln 12 kann es sich nicht beschränkend um Kornbestandteile und Nicht-Kornbestandteile handeln, die von dem Feldhäcksler 1 zerkleinert wurden.

Die Recheneinheit 14 kann Teil der landwirtschaftlichen Erntemaschine und/oder cloudbasiert sein.

Die Recheneinheit 14 ist eingerichtet, Bilder 15 des Gutstroms 13 in einer Analyseroutine zu analysieren und mittels dieser Analyse Partikellängen L von in den Bildern 15 enthaltenen Partikeln 12 des Gutstroms 13 abzuleiten.

Wesentlich ist nun, dass die in der Analyseroutine abgeleitete Partikellänge L eine Überlänge U ist und dass die Analyseroutine auf einem auf das Finden von Partikeln 12 mit Überlänge U trainierten Maschinenlernverfahren basiert. Es wird also vorschlagsgemäß ein Maschinenlernverfahren verwendet, das spezifisch auf das Finden von Partikeln 12 mit Überlänge U trainiert wurde. Dabei können natürlich Partikel 12 ohne Überlänge U zum Teil zwischenzeitlich erkannt und dann aussortiert werden oder dergleichen, jedoch werden Partikel 12 ohne Überlänge U nicht systematisch erkannt. Insbesondere werden nicht erst alle Partikel 12 identifiziert und erkannt und anschließend nur die mit Überlänge U analysiert. Vielmehr ist das Maschinenlernverfahren so trainiert, dass es primär nach Partikeln 12 mit Überlänge U sucht. Dadurch wird der Rechenaufwand des Maschinenlernverfahrens gegenüber einem Verfahren, das alle Partikel analysiert, reduziert.

Hier und vorzugsweise ist vorgesehen, dass eine Menge an Partikeln 12 mit Überlänge U absolut oder relativ ermittelt wird. Sofern ein Anteil der Partikel 12 mit Überlänge U an einer Gesamtmenge an Partikeln 12 ermittelt wird, werden dafür vorzugsweise Schätzwerte für die Gesamtmenge an Partikeln 12 genutzt. Auch ein rudimentärer Bilderkennungsalgorithmus zum Zählen der Gesamtmenge an Partikeln 12 ist jedoch grundsätzlich denkbar.

Wie bereits erwähnt, ist es hier und vorzugsweise so, dass der Gutstrom 13 ein Erntegutstrom ist, der eine landwirtschaftliche Erntemaschine, insbesondere den Feldhäcksler 1, durchläuft. In diesem Zusammenhang ist es dann vorzugsweise so, dass die Bilder 15 von einer Kamera 16 der landwirtschaftlichen Erntemaschine, insbesondere in der landwirtschaftlichen Erntemaschine, aufgenommen wurden oder werden.

Ein weiterer in diesem Zusammenhang interessanter Aspekt, der jedoch auch für sich genommen bei anderen Gutströmen 13, also ganz allgemein, vorteilhaft sein kann, ist, dass die Kamera 16 hier und vorzugsweise einen vordefinierten Abstand zu dem Erntegutstrom oder allgemein dem Gutstrom 13 aufweist. Dieser Aspekt hat mehrere Vorteile. Zum einen wird es damit möglich, die Länge L eines Partikels 12 von Pixeln in eine reale Größe umzurechnen. Weiterhin ist es hier und vorzugsweise so, dass eine Architektur des Maschinenlernverfahrens und/oder das Training des Maschinenlernverfahrens den vordefinierten Abstand berücksichtigt. Bei Objekterkennung in der Bildverarbeitung ist es üblicher Weise so, dass viele Skalierungen in Architektur und/oder Training des Maschinenlernverfahrens berücksichtigt werden, da nicht klar ist, in welcher Größe die Objekte letztendlich im Bild 15 auftauchen werden. Dieses Problem hat zu diversen Lösungsansätzen geführt, die jedoch im Allgemeinen mit einer erhöhten Rechenkomplexität einhergehen. Vorliegend ist es möglich, diese Komplexität teilweise einzusparen.

In Fig. 1 ist die Kamera 16 zusammen mit einer optionalen Optik 17 am Auswurfkrümmer 18 des Feldhäckslers 1 angeordnet. Andere Anordnungen sind jedoch ebenso denkbar.

Hier und vorzugsweise wird die landwirtschaftliche Erntemaschine, insbesondere der Feldhäcksler 1, basierend auf den gefundenen Partikeln 12 mit Überlänge U gesteuert. Diese Steuerung kann dabei auch eine Regelung sein und betrifft ganz allgemein die Einstellung eines Maschinenparameters oder dergleichen. Zusätzlich oder alternativ kann jedoch auch vorgesehen sein, dass die Menge an Partikeln 12 mit Überlänge U einem Benutzer B angezeigt wird. Vorzugsweise wird die Drehzahl der Einzugswalzen 8a und/oder die Drehzahl der Vorpresswalzen 8b und/oder der Anpressdruck der Vorpresswalzen 8b und/oder die Drehzahl der Häckseltrommel 11 und/oder die Motordrehzahl des Feldhäckslers 1 basierend auf den gefundenen Partikeln 12 mit Überlänge U eingestellt. Hier und vorzugsweise wird der Feldhäcksler 1 dabei zur Reduktion der Menge an Partikeln 12 mit Überlänge U von der Recheneinheit 14 angesteuert.

Vorzugsweise wird die landwirtschaftliche Erntemaschine in Echtzeit basierend auf der Menge an Partikeln 12 mit Überlänge U gesteuert und/oder geregelt. Der Begriff "Echtzeit" ist in diesem Zusammenhang weit zu verstehen und bedeutet, dass das Empfangen der Daten bzw. Informationen in einen vorgegebenen Zeitraum ab dem Senden und/oder Generieren der Daten erfolgt, der höchstens eine halbe Stunde, bevorzugt höchstens wenige Sekunden, zum Beispiel höchstens 30 Sekunden, besonders bevorzugt höchstens wenige Bruchteile von Sekunden, zum Beispiel höchstens eine halbe Sekunde, beträgt.

Im Rahmen der Steuerung des Feldhäckslers 1 werden vorzugsweise mehrere Bilder 15 analysiert, die dann zusammen als Grundlage für die Steuerung dienen. Dabei kann blockweise vorgegangen werden oder auch ein laufender Mittelwert gebildet werden.

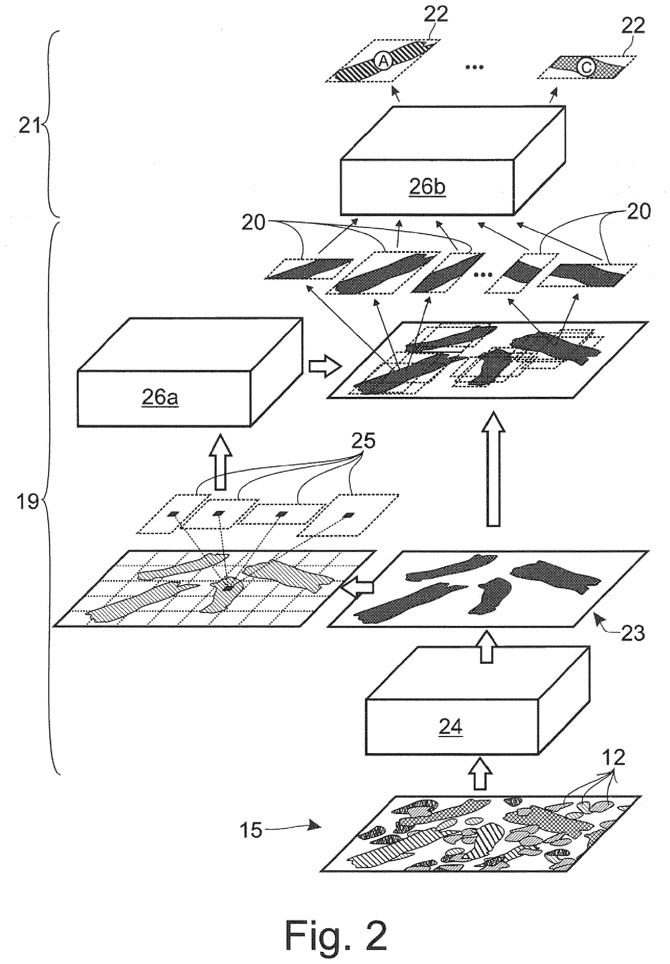

Die Analyseroutine und speziell ein bevorzugtes Maschinenlernverfahren wird nun anhand von Fig. 2 näher erläutert. Dabei ist es hier und vorzugsweise so, dass in einem Vorschlagsschritt 19 der Analyseroutine Vorschlagsregionen 20 identifiziert werden, die potenziell Partikel 12 mit Überlänge U enthalten. Die bevorzugte Ausführungsform des Vorschlagsschritts 19 wird im Folgenden noch dargestellt. Es darf jedoch hier darauf hingewiesen werden, dass grundsätzlich diverse bekannte Vorschlagsschritte 19 Anwendung finden können. Geeignete Algorithmen sind unter dem Begriff "region proposal" bekannt.

Anschließend werden vorzugsweise in einem Klassifikationsschritt 21 die Vorschlagsregionen 20 analysiert, insbesondere klassifiziert, um aus den Vorschlagsregionen 20 Ergebnisregionen 22 zu ermitteln, die einen Partikel 12 mit Überlänge U enthalten.

Hier und vorzugsweise verwendet der Klassifikationsschritt 21 teilweise Berechnungen des Vorschlagsschritts 19 wieder. Diese Wiederverwendung ist beispielsweise aus dem "Faster R-CNN"-Algorithmus bekannt.

Allgemein ist es hier und vorzugsweise so, dass die Analyseroutine auf einem trainierten neuronalen Netzwerk als Maschinenlernverfahren basiert, vorzugsweise, dass das neuronale Netzwerk ein neuronales Faltungsnetzwerk ist. Neuronale Faltungsnetzwerke sind unter dem Begriff "convolutional neural network" bekannt.

Wie im Folgenden noch erläutert wird, ist es vorzugsweise so, dass der Vorschlagsschritt 19 und/oder der Klassifikationsschritt 21 auf einem trainierten neuronalen Netzwerk basieren. Vorzugsweise verwenden der Vorschlagsschritt 19 und der Klassifikationsschritt 21 teilweise dasselbe trainierte neuronale Netzwerk.

Hier und vorzugsweise basiert der Vorschlagsschritt 19 auf einem sogenannten "region proposal network". Es kann vorgesehen sein, dass der Vorschlagsschritt 19 die Anwendung eines Merkmalsextraktors ("feature extractor") direkt oder indirekt auf die Bilder 15 zum Generieren eines Merkmalsraums 23 umfasst. Der Merkmalsextraktor basiert hier und vorzugsweise auf einem Faltungsnetzwerk 24, wie dies insbesondere für neuronale Faltungsnetzwerke üblich ist. In Fig. 2 ist der Merkmalsraum 23, bekannt als "feature space" nur mit einer Ebene dargestellt, er umfasst jedoch vorzugsweise mehrere Ebenen.

Der Vorschlagsschritt 19 kann weiterhin die Anwendung von Ankerboxen 25, insbesondere auf jeden Pixel des Merkmalsraums 23, umfassen. Weiter kann der Vorschlagsschritt 19 die Anwendung eines klassifizierenden neuronalen Netzwerks 26a auf die Ankerboxen 25 umfassen, um aus den Ankerboxen 25 die Vorschlagsregionen 20 zu identifizieren.

Anhand von Fig. 2 läuft der Vorschlagsschritt 19 in der Summe also vorzugsweise so ab, dass ein Bild 15, insbesondere ein Farb-Bild, mit einer Mehrzahl trainierter Filter des Faltungsnetzwerks 24 in einen Merkmalsraum 23 überführt wird. Auf diesen Merkmalsraum 23 werden nach Art eines sliding window die Anker 25 angewendet, die in das klassifizierende neuronale Netzwerk 26a des Vorschlagsschritts 19 Eingang finden. Dieses ebenfalls trainierte Netzwerk 26a identifiziert die vielversprechendsten Kandidaten für Partikel 12 mit Überlänge U und gibt diese als Vorschlagsregionen 20 aus. Den Ankerboxen 25 ist dabei vorzugsweise ihre Position im ursprünglichen Bild 15 zugeordnet.

Der anschließende Klassifikationsschritt 21 ordnet vorzugsweise die Vorschlagsregionen 20 in Klassen ein, wobei mindestens eine Klasse Partikel 12 mit Überlängen U beinhaltet. Interessant ist vorliegend die Möglichkeit, dass mindestens eine Klasse akzeptable Partikel 12 mit Überlängen U und mindestens eine Klasse nichtakzeptable Partikel 12 mit Überlängen U beinhaltet. Bei der vorliegend im Vordergrund stehenden Anwendung auf einer landwirtschaftlichen Erntemaschine, insbesondere einem Feldhäcksler 1, existieren einige Partikel 12, insbesondere Blätter, die auf Grund ihrer Struktur beim Häckseln regelmäßig weniger zerkleinert werden. Da diese Partikel 12 mit Überlänge U entsprechend prozessinhärent sind, werden sie häufig akzeptiert.

Der Klassifikationsschritt 21 basiert hier und vorzugsweise ebenfalls auf einem klassifizierenden neuronalen Netzwerk 26b. Dieses ist vorzugsweise teilweise identisch mit dem klassifizierenden neuronalen Netzwerk 26a des Vorschlagsschritts 19. Sofern die Rede von einem neuronalen Netzwerk ist vorliegend vorzugsweise das Faltungsnetzwerk 24 und/oder das klassifizierenden neuronalen Netzwerk 26a des Vorschlagsschritts 19 und/oder das klassifizierenden neuronalen Netzwerk 26a des Klassifikationsschritts 21 gemeint.

Hier und vorzugsweise ordnet der Klassifikationsschritt 21 die Partikel 12 in mindestens drei Klassen und/oder in höchstens hundert Klassen, vorzugsweise höchstens fünfzig Klassen, weiter vorzugsweise höchstens zehn Klassen ein.

Vorliegend basieren der Vorschlagsschritt 19 und der Klassifikationsschritt 21 auf einem Maschinenlernverfahren. Es ist jedoch auch denkbar, dass nur einer von beiden Schritten 19, 21 auf einem Maschinenlernverfahren basiert. Beispielsweise sind Vorschlagsschritte 19 bekannt, die nicht auf einem Maschinenlernverfahren beruhen. Gleichzeitig ist auch die Möglichkeit interessant, bereits auf Basis der Vorschlagsregionen 20 die Menge an Partikeln 12 mit Überlänge U zu schätzen.

Allgemein ist es hier und vorzugsweise so, dass die Überlänge U relativ zu einer vorgegebenen Partikellänge L, insbesondere einer eingestellten Partikellänge L, definiert ist. Somit wird es notwendig, dass die Analyseroutine in der Lage ist, variierende Definitionen der Überlänge U zu berücksichtigen. Bezogen auf das vorliegende Ausführungsbeispiel ist es vorzugsweise so, dass die Überlänge U relativ zu einer theoretischen Schnittlänge TLOC des Feldhäckslers 1 definiert ist, vorzugsweise, dass die Überlänge U als 1,2 mal, vorzugsweise 1,4 mal, und/oder höchstens als 2 mal, vorzugsweise höchstens 1,7 mal, und/oder etwa 1,5 mal die theoretische Schnittlänge TLOC definiert ist. Bei den als zweites angegebenen Werten handelt es sich dabei nicht um einen Maximalwert für die Überlänge U, sondern um einen maximalen Schwellwert, ab dem eine Überlänge U beginnt. Vorzugsweise ist die Definition der Überlänge U auf einer beliebigen Maschine, die den Gutstrom 13 erzeugt, einstellbar, wobei die Überlänge U sich relativ zu einer eingestellten Prozessgröße ergibt.

Es ist möglich, dass ein trainiertes Maschinenlernverfahren nicht für einen großen Bereich an Überlängen U konstant gute Ergebnisse erzielt. Es ist daher vorzugsweise so, dass die Recheneinheit 14 aus mindestens zwei trainierten Maschinenlernverfahren, vorzugsweise mindestens drei trainierten Maschinenlernverfahren, die jeweils auf unterschiedliche Überlängenbereiche trainiert sind, auswählt. Da sich die Maschinenlernverfahren vorzugsweise nur durch unterschiedliche Trainingsdatensätze 29, insbesondere Gewichte der neuronalen Verbindungen und/oder Ankerboxen 25, unterscheiden, steht eine Auswahl eines Maschinenlernverfahrens vorzugsweise einer Auswahl des Trainingsdatensatzes 29 gleich. Die Architektur des Maschinenlernverfahrens wird also vorzugsweise nicht verändert.

Vorzugsweise wählt die Recheneinheit 14 basierend auf einer extern vorgegebenen Länge, insbesondere Überlänge U und/oder theoretischen Schnittlänge TLOC, eines der Maschinenlernverfahren aus. Hier und vorzugsweise wählt die Recheneinheit 14 maximal aus dreißig, vorzugsweise maximal aus zwanzig, noch weiter vorzugsweise maximal aus zehn Maschinenlernverfahren oder Trainingsdatensätzen 29 aus.

Die theoretische Schnittlänge TLOC kann von dem Feldhäcksler 1 an die Recheneinheit 14 übergeben werden oder von der Recheneinheit 14 aus Maschinenparametern des Feldhäckslers 1 berechnet werden oder von einem Benutzer B eingestellt worden sein oder dergleichen, alternativ ist jedoch auch möglich, dass die Recheneinheit 14 die theoretische Schnittlänge TLOC aus den Bildern 15 schätzt. Dabei kann sie beispielsweise auf einen Teil des Maschinenlernverfahrens zurückgreifen.

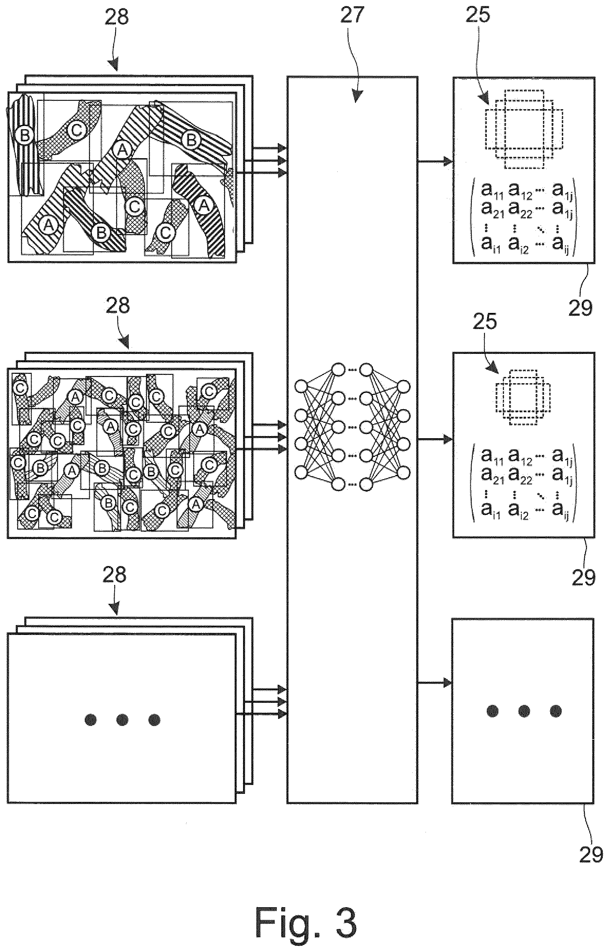

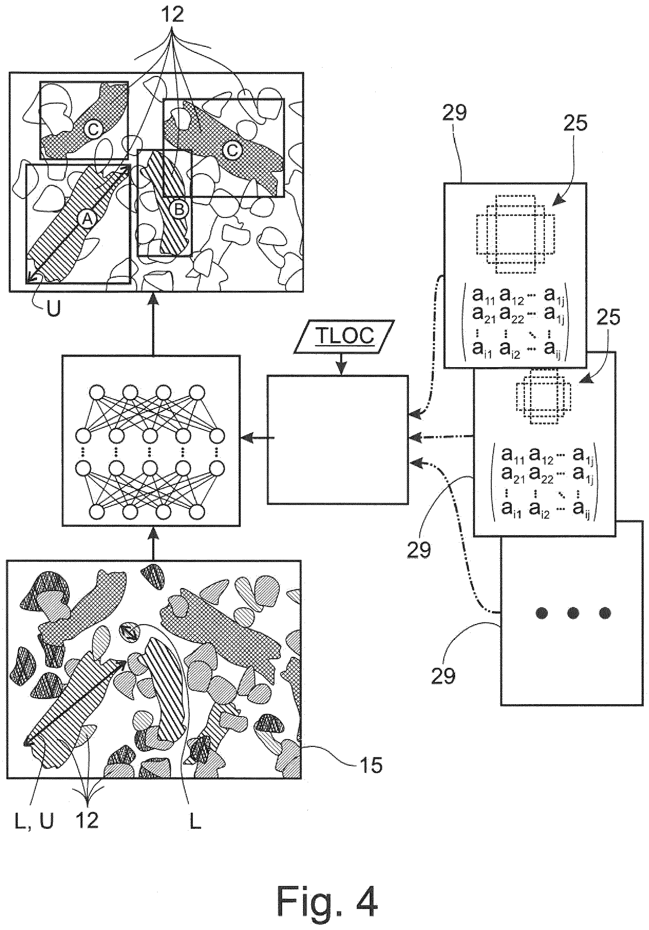

Fig. 3 zeigt das Training der verschiedenen Maschinenlernverfahren, wie es im Folgenden noch erläutert wird. Fig. 4 zeigt die gerade erläuterte Anwendung der verschiedenen Maschinenlernverfahren.

Das Maschinenlernverfahren wird oder wurde vorzugsweise in einem Trainingsschritt 27, insbesondere basierend auf annotierten Bildern 28 des Gutstroms 13 trainiert. Das Ergebnis des Trainings ist ein Trainingsdatensatz 29. Dieser kann die Gewichte der neuronalen Netzwerke und/oder die Ankerboxen 25 beinhalten.

Es kann vorgesehen sein, dass in dem Trainingsschritt 27 ein allgemeines Training basierend auf annotierten Bildern 28 mit unterschiedlichen Definitionen von Überlänge und vorzugsweise anschließend ein spezifisches Training für je eine Definition von Überlänge U durchgeführt wird, und/oder, dass in dem Trainingsschritt 27 nur ein spezifisches Training für je eine Definition von Überlänge U durchgeführt wird.

Hier und vorzugsweise basiert der Trainingsschritt 27 auf annotierten Bildern 28, die mit dem vordefinierten Abstand aufgenommen wurden. In den annotierten Bildern 28 wurden vorzugsweise nur oder im Wesentlichen Partikel 12 mit Überlänge U annotiert. Das Training ist entsprechend auf Überlängen U ausgerichtet.

Neben den Gewichten der neuronalen Netzwerke werden vorzugsweise auch die Ankerboxen 25 trainiert. Dabei können anhand der Überlänge U untere Grenzwerte für die Ankerboxen 25 festgelegt werden. Obergrenzen für die Größen der Ankerboxen 25 können anhand von realistisch bei den theoretischen Schnittlängen TLOC oder allgemein in einem Überlängenbereich auftretenden Maximum an Partikellängen L statistisch festgelegt werden.

Wie erwähnt, können in dem Trainingsschritt 27 die Ankerboxen 25, vorzugsweise zusammen mit dem neuronalen Netzwerk, insbesondere zusammen mit dem Faltungsnetzwerk 24 und/oder dem klassifizierenden neuronalen Netzwerk 26a, 26b, trainiert werden.

Der Trainingsschritt 27 kann durch eine Vorauswahl von Ankerboxen 25 als Ausgangspunkt für das Training verkürzt werden. Hier und vorzugsweise ist es so, dass als Ausgangspunkt für das Training der Ankerboxen 25 vorbestimmte Ankerboxen 25 verwendet werden und dass die vorbestimmten Ankerboxen 25 mittels eines Clustering-Verfahrens, insbesondere eines k-means-Verfahrens, aus Größen von ground truth Boxen der annotierten Bilder 28 generiert werden. Dabei werden vorzugsweise alle bounding Boxen der annotierten Bilder 28 zusammengenommen und mittels des Clustering-Verfahrens in eine gewünschte Anzahl an Mittelwertboxen überführt. Dies geschieht entsprechend unabhängig von den Bildern 15 und den neuronalen Netzwerken. Es kann vorgesehen sein, dass die vorbestimmten Ankerboxen 25 für mehrere theoretische Schnittlängen TLOC unterschiedlich ermittelt werden.

Weiterhin ist möglich, dass in dem Trainingsschritt 27 mindestens zwei unterschiedliche Trainingsdatensätze 29 abhängig von einer Pflanzenart und/oder einer Ernteperiode und/oder einem Erntewetter erzeugt werden. Diese werden vorzugsweise entsprechend spezifisch auf der landwirtschaftlichen Erntemaschine eingesetzt.

Auf technischer Ebene kann die Rechenintensität reduziert werden, wenn Gewichte des neuronalen Netzwerks, vorzugsweise des Faltungsnetzwerks 24 und/oder des klassifizierenden neuronalen Netzwerks 26a, 26b, mit einer Genauigkeit 8 oder 16 Bit, insbesondere von int8 oder int16 oder float8 oder float16, verwendet werden. Zusätzlich oder alternativ kann das neuronale Netzwerk, zumindest teilweise, auf einer Inception-Architektur, insbesondere einer Inception V2- oder Inception V3-Architektur basieren. Zusätzlich oder alternativ kann das neuronale Netzwerk mittels Tensorflow oder Tensorflow Lite verwendet werden oder trainiert werden oder trainiert worden sein.

Nach einer weiteren Lehre, der eigenständige Bedeutung zukommt, wird ein Datenträger mit einem Trainingsdatensatz 29 zur Verwendung in dem vorschlagsgemäßen Verfahren erzeugt mittels des Trainingsschritts 27 vorgeschlagen. Auf alle Ausführungen zu dem vorschlagsgemäßen Verfahren darf verwiesen werden.

### Bezugszeichen

- 1: Feldhäcksler
- 2: Arbeitsaggregat
- 3: Feldbestand
- 4: Erntegut
- 5: Corncracker
- 6: Walzen des Corncrackers
- 7: Spalt des Corncrackers
- 8a: Vorpresswalzen
- 8b: Einzugswalzen
- 9: Motor
- 10: Vorsatzgerät
- 11: Häckseltrommel
- 12: Partikel
- 13: Gutstrom
- 14: Recheneinheit
- 15: Bild
- 16: Kamera
- 17: Optik
- 18: Auswurfkrümmer
- 19: Vorschlagsschritt
- 20: Vorschlagsregionen
- 21: Klassifikationsschritt
- 22: Ergebnisregionen
- 23: Merkmalsraum
- 24: Faltungsnetzwerk des Vorschlagsschritts
- 25: Ankerboxen
- 26a: klassifizierendes neuronales Netzwerk des Vorschlagsschritts
- 26b: klassifizierendes neuronales Netzwerk des Klassifikationsschritts
- 27: Trainingsschritt
- 28: annotierte Bilder
- 29: Trainingsdatensatz
- B: Benutzer
- L: Partikellänge
- U: Überlänge
- TLOC: theoretische Schnittlänge

## Patentansprüche

1. Verfahren zur Erkennung von Längen eines Partikels (12) in einem aus Partikeln (12) bestehenden Gutstrom (13) mittels einer Recheneinheit (14), wobei die Recheneinheit (14) eingerichtet ist, Bilder (15) des Gutstroms (13) in einer Analyseroutine zu analysieren und mittels dieser Analyse Partikellängen (L) von in den Bildern (15) enthaltenen Partikeln (12) des Gutstroms (13) abzuleiten,
**dadurch gekennzeichnet,**
**dass** die in der Analyseroutine abgeleitete Partikellänge (L) eine Überlänge (U) ist und dass die Analyseroutine auf einem auf das Finden von Partikeln (12) mit Überlänge (U) trainiertem Maschinenlernverfahren basiert.

2. Verfahren nach Anspruch 1, **dadurch gekennzeichnet, dass** der Gutstrom (13) ein Erntegutstrom ist, dass der Erntegutstrom eine landwirtschaftliche Erntemaschine, insbesondere einen Feldhäcksler (1), durchläuft, dass die Bilder (15) von einer Kamera (16) der landwirtschaftlichen Erntemaschine, insbesondere in der landwirtschaftlichen Erntemaschine, aufgenommen wurden, vorzugsweise, dass die Kamera (16) einen vordefinierten Abstand zu dem Erntegutstrom aufweist.

3. Verfahren nach Anspruch 2, **dadurch gekennzeichnet, dass** die landwirtschaftliche Erntemaschine, insbesondere der Feldhäcksler (1), basierend auf den gefundenen Partikeln (12) mit Überlänge (U) gesteuert wird, vorzugsweise, dass die Drehzahl der Einzugswalzen (8a) und/oder die Drehzahl der Vorpresswalzen (8b) und/oder der Anpressdruck der Vorpresswalzen (8b) und/oder die Drehzahl der Häckseltrommel (11) und/oder eine Motordrehzahl des Feldhäckslers (1) basierend auf den gefundenen Partikeln (12) mit Überlänge (U) eingestellt wird.

4. Verfahren nach einem der vorhergehenden Ansprüche, **dadurch gekennzeichnet, dass** in einem Vorschlagsschritt (19) der Analyseroutine Vorschlagsregionen (20) identifiziert werden, die potentiell Partikel (12) mit Überlänge (U) enthalten, vorzugsweise, dass in einem Klassifikationsschritt (21) die Vorschlagsregionen (20) analysiert, insbesondere klassifiziert, werden, um aus den Vorschlagsregionen (20) Ergebnisregionen (22) zu ermitteln, die einen Partikel (12) mit Überlänge (U) enthalten, weiter vorzugsweise, dass der Klassifikationsschritt (21) teilweise Berechnungen des Vorschlagsschritts (19) wiederverwendet.

5. Verfahren nach einem der vorhergehenden Ansprüche, **dadurch gekennzeichnet, dass** die Analyseroutine auf einem trainierten neuronalen Netzwerk als Maschinenlernverfahren basiert, vorzugsweise, dass das neuronale Netzwerk ein neuronales Faltungsnetzwerk ist.

6. Verfahren nach Anspruch 4 und 5, **dadurch gekennzeichnet, dass** der Vorschlagsschritt (19) und/oder der Klassifikationsschritt (21) auf einem trainierten neuronalen Netzwerk basieren, vorzugsweise, dass der Vorschlagsschritt (19) und der Klassifikationsschritt (21) teilweise dasselbe trainierte neuronale Netzwerk verwenden.

7. Verfahren nach Anspruch 4 und ggf. einem der Ansprüche 5 oder 6, **dadurch gekennzeichnet, dass** der Vorschlagsschritt (19) die Anwendung eines Merkmalsextraktors, insbesondere basierend auf einem Faltungsnetzwerk (24), direkt oder indirekt auf die Bilder (15) zum Generieren eines Merkmalsraums (23) umfasst, vorzugsweise dass der Vorschlagsschritt (19) die Anwendung von Ankerboxen (25), insbesondere auf jeden Pixel des Merkmalsraums (23), umfasst, weiter vorzugsweise, dass der Vorschlagsschritt (19) die Anwendung eines klassifizierenden neuronalen Netzwerks (26a) auf die Ankerboxen (25) umfasst, um aus den Ankerboxen (25) Vorschlagsregionen (20) zu identifizieren.

8. Verfahren nach Anspruch 4 und ggf. einem der Ansprüche 5 bis 7, **dadurch gekennzeichnet, dass** der Klassifikationsschritt (21) die Vorschlagsregionen (20) in Klassen einordnet, wobei mindestens eine Klasse Partikel (12) mit Überlängen (U) beinhaltet, vorzugsweise, dass mindestens eine Klasse akzeptable Partikel (12) mit Überlängen (U) und mindestens eine Klasse nicht akzeptable Partikel (12) mit Überlängen (U) beinhaltet.

9. Verfahren nach einem der vorhergehenden Ansprüche, **dadurch gekennzeichnet, dass** die Überlänge (U) relativ zu einer vorgegebenen Partikellänge (L), insbesondere einer eingestellten Partikellänge (L), definiert ist, vorzugsweise, dass die Überlänge (U) relativ zu einer theoretischen Schnittlänge (TLOC) des Feldhäckslers (1) definiert ist, weiter vorzugsweise, dass die Überlänge (U) als mindestens 1,2 mal, vorzugsweise 1,4 mal, und/oder höchstens als 2 mal, vorzugsweise höchstens 1,7 mal, und/oder etwa 1,5 mal die theoretische Schnittlänge (TLOC) definiert ist.

10. Verfahren nach einem der vorhergehenden Ansprüche, **dadurch gekennzeichnet, dass** die Recheneinheit (14) aus mindestens zwei trainierten Maschinenlernverfahren, vorzugsweise mindestens drei trainierten Maschinenlernverfahren, insbesondere Trainingsdatensätzen (29) des gleichen Maschinenlernverfahrens, die jeweils auf unterschiedliche Überlängenbereiche trainiert sind, auswählt, vorzugsweise, dass die Recheneinheit (14) basierend auf einer extern vorgegebenen Länge, insbesondere Überlänge (U) oder und/oder theoretischen Schnittlänge (TLOC), eines der Maschinenlernverfahren auswählt.

11. Verfahren nach einem der vorhergehenden Ansprüche, **dadurch gekennzeichnet, dass** in einem Trainingsschritt (27) das Maschinenlernverfahren, insbesondere basierend auf annotierten Bildern (28) des Gutstroms (13), trainiert wurde oder trainiert wird, wobei das Ergebnis des Trainings ein Trainingsdatensatz (29) ist, vorzugsweise, dass in dem Trainingsschritt (27) ein allgemeines Training basierend auf annotierten Bildern (28) mit unterschiedlichen Definitionen von Überlänge (U) und vorzugsweise anschließend ein spezifisches Training für je eine Definition von Überlänge (U) durchgeführt wird, und/oder, dass in dem Trainingsschritt (27) nur ein spezifisches Training für je eine Definition von Überlänge (U) durchgeführt wird.

12. Verfahren nach den Ansprüchen 7 und 11, **dadurch gekennzeichnet, dass** die Ankerboxen (25) in dem Trainingsschritt (27), vorzugsweise zusammen mit dem neuronalen Netzwerk, insbesondere zusammen mit dem Faltungsnetzwerk (24) und/oder dem klassifizierenden neuronalen Netzwerk (26a, b), trainiert werden, vorzugsweise, dass als Ausgangspunkt für das Training der Ankerboxen (25) vorbestimmte Ankerboxen (25) verwendet werden und dass die vorbestimmten Ankerboxen (25) mittels eines clustering Verfahrens, insbesondere eines k-means Verfahrens, aus Größen von ground truth Boxen der annotierten Bilder (28) generiert werden.

13. Verfahren nach einem der Ansprüche 11 oder 12, **dadurch gekennzeichnet, dass** in dem Trainingsschritt (27) mindestens zwei unterschiedliche Trainingsdatensätze (29) abhängig von einer Pflanzenart und/oder einer Ernteperiode und/oder einem Erntewetter erzeugt werden.

14. Verfahren nach einem der vorhergehenden Ansprüche, **dadurch gekennzeichnet, dass** Gewichte des neuronalen Netzwerks mit einer Genauigkeit von Int8 oder Int16 oder Float8 oder Float16 verwendet werden, und/oder, dass das neuronale Netzwerk, zumindest teilweise, auf einer Inception Architektur, insbesondere einer Inceptionv2 oder Inceptionv3 Architektur, basiert, und/oder, dass das neuronale Netzwerk mittels Tensorflow oder Tensorflow lite verwendet wird oder trainiert wird oder wurde.

15. Datenträger mit einem Trainingsdatensatz (29) zur Verwendung in dem Verfahren nach einem der vorhergehenden Ansprüche erzeugt mittels des Trainingsschritts (27) nach einem der Ansprüche 11 bis 13.
